## Europäisches Patentamt
## European Patent Office
## Office européen des brevets

(19)

(11) Publication number: **0 049 185**
A2

# EUROPEAN PATENT APPLICATION

(21) Application number: **81401428.8**

(22) Date of filing: **14.09.81**

(51) Int. Cl.³: **B 60 T 11/20**

(30) Priority: **29.09.80 US 191740**

(43) Date of publication of application: **07.04.82**
Bulletin 82/14

(84) Designated Contracting States: **DE FR GB**

(71) Applicant: **THE BENDIX CORPORATION, Executive Offices Bendix Center, Southfield, Michigan 48037 (US)**

(72) Inventor: **Fulmer, Keith H., 15688 Kern Road, Mishawaka, Ind. 46644 (US)**
Inventor: **Thesier, Patric Allen, 78 Longview Drive, Clifton Park, N.Y. 12065 (US)**

(74) Representative: **Huchet, André et al, Service Brevets Bendix 44, rue François 1er, F-75008 Paris (FR)**

(54) **Compensator valve for a fluid pressurizing device.**

(57)    A compensator valve for a fluid pressurizing device having a bore in which is slidably received at least one piston defining a pressure chamber therewith, a first passage connecting said chamber to an outlet port, a second passage connecting said chamber to a fluid reservoir, and a compensator valve controlling fluid communication through said second passage for replenishment purposes.

According to the invention, the second passage (98) communicates with and intersects the first passage (82) outside the bore (42), and the compensator valve (86) is located at the intersection of both passages and closes the second one in response to pressurization of the fluid in the pressure chamber by movement of the piston (43).

For use particularly in hydraulic brake systems for vehicles.

COMPENSATOR VALVE FOR A FLUID
PRESSURIZING DEVICE

0049185

This invention relates to a compensator valve for controlling the communication of fluid between a reservoir and a bore in a fluid pressurizing device, and is of particular interest, for instance, in the field of hydraulic brake systems for vehicles.

Compensator arrangements allow fluid to be communicated to a fluid system to replace any fluid losses that can occur during operation of devices in the system.

A typical compensator arrangement is shown in US Patent No. 3 296 798 wherein a lip seal located on a piston is positioned in a rest position behind a port of a compensator passage through which fluid is communicated from a reservoir into a fluid chamber. On movement of the piston, the lip seal must travel past the port before the the communication between the bore and reservoir is interrupted. Unfortunately, after an extended period of use it is possible that the lip seal can be cut by the housing adjacent the port. Thereafter, on movement of the piston in response to an input force applied to the piston, fluid in the bore flows through the cut rather than being pressurized in the bore.

In an attempt to prevent the lip seals from being cut, it has been suggested to locate a compensator valve such as the tilt valve shown in US Patent No. 3 818 706 and the sleeve valve shown in US Patent No. 3 800 540 adjacent the bottom of the bore in which the piston is located. The tilt valve and sleeve valve are actuated by a spring on movement of the piston toward the port of the compensator valve.

Unfortunately in the operation of these compensator arrangements, loss motion occurs since the piston either has to travel past the compensator port or move sufficiently to move the sleeve past the tilt valve before fluid communication between the bore and reservoir is interrupted.

It is an essential object of the present invention to solve the problem of a fluid pressurizing device malfunction produced by seal cuts caused by engagement of the compensating port and the lost motion effect on the operational efficiency caused by the delay in closing the compensating port because of the travel of the piston in the bore of the pressurizing device.

This object is achieved, according to the teaching of the present invention, and in the case of a fluid pressurizing device having a housing with a bore therein, at least one piston slidably received within said bore and defining a pressure chamber therewith, a first passage for connecting said chamber to an outlet port communicable with a fluid pressure responsive device, a second passage for connecting said chamber to a fluid reservoir to allow replenishment fluid to be communicated with said chamber, and a compensator valve controlling said second passage so as to interrupt fluid communication therethrough in response to movement of the piston from an idle position toward an operating position under the action of an input force, thanks to the fact that the second passage communicates with and intersects the first passage outside the bore, and that the compensator valve is located at the intersection of said passages and is designed so as to close the second passage in response to pressurization of the fluid within the pressure chamber and immediately allow pressurized fluid to be communicated through the outlet port to the fluid pressure responsive device on movement of the piston.

In a preferred embodiment of the invention, the compensator valve comprises a pressure responsive valve member slidably/mounted at the intersection of both passages, said valve member having an end face which cooperates with an annular fixed seat for controlling fluid communication through the second passage, said end face being normally urged away from said seat to permit fluid communication between the second and first passages, and urged against said seat upon pressurization of the fluid contained in said pressure chamber on movement of the piston. The compensator valve further includes a spring cooperating with said valve member for urging its end face away from the fixed seat to require the presence of a predetermined fluid pressure in the pressure chamber before interrupting fluid communication through the second passage. The valve further includes a tubular section terminating in a peripheral radially-extending lip at its end opposite said end face, said lip slidably engaging the housing and permitting fluid communication through the second passage from the reservoir toward the pressure chamber when the pressure in the latter is less than that in said reservoir. The valve of the invention may further include inside its end face an opening which controls fluid communication through the first passage and which resiliently expands under the action of the fluid pressure within the pressure chamber once said end face is urged against its associated fixed seat.

In addition to achieving the above defined object, the compensator valve of this invention further provides the advantages that fluid pressure is immediately transmitted to the pressure responsive device on initial movement of the operational piston in the bore, and also that the housing of the fluid pressurizing device such as a master cylinder can telescope into the housing of an associated brake booster thereby reducing the overall length of the device since the reservoir can be located in a position remote from the first housing.

These and other advantageous features of the invention will become more readily apparent from reading the following description of a preferred embodiment, given by way of example only, and with reference to the accompanying drawings, in which :

- Figure 1 is a schematic illustration of a brake system with sectional view of a fluid pressurizing device made according to the principles of this invention located therein ;

- Figure 2 is an enlarged sectional view taken along line 2-2 of Figure 1 ;

- Figure 3 is a sectional view similar to that of Figure 2, but showing the compensator valve in the closed position ; and

- Figure 4 is a sectional view of a remotely positioned reservoir for the fluid pressurizing device with a compensator valve located therein for controlling the communication of fluid to the brake system.

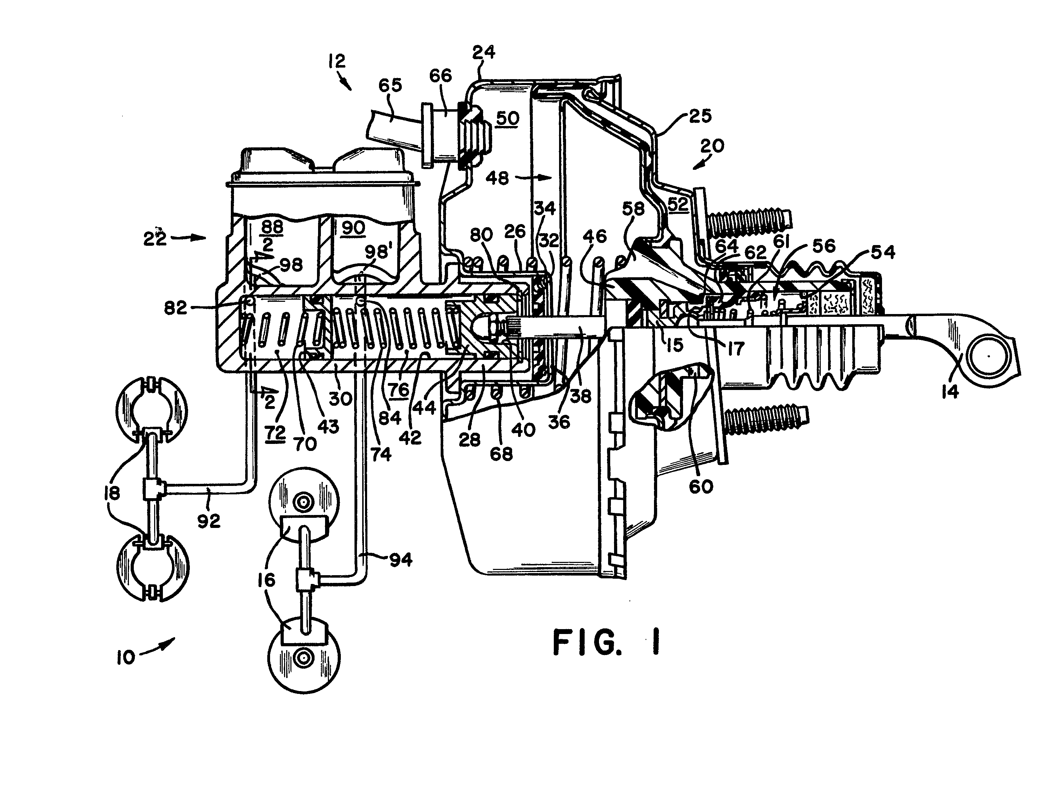

The brake system 10 shown in Figure 1 has a fluid pressurizing device 12 that is responsive to an input force applied to a push rod 14 for supplying pressurized fluid to the front brakes 16 and rear brakes 18 of a vehicle to effect a brake application.

The fluid pressurizing device 12 has a power assist device 20 integrated with a master cylinder 22.

The power assist device 20 is similar to the power assist device disclosed in US Patent No. 3 977 299 with the exception of the front shell 24 which has an inwardly projecting annular sleeve 26 for retaining a first section 28 of the housing 30 of the master cylinder 22. Sleeve 26 has a lip 32 which positions seal 34 in adjacent opening 36. The master cylinder 22 is connected to the power assist device 20 by a push rod 38. Push rod 38 has a first end that extends through seal 34 into socket 40 of a piston 44 located in a bore 42 of the master cylinder 22, and a second end retained in hub 46 of a movable wall 48. The hub 46 of wall 48, which separates chamber 50 in the power assist device 20 from chamber 52, has a bore 54 therein for retaining a valve arrangement 56. A first passage 58 which extends through hub 46 connects chamber 50 with bore 54 and a second passage 60 connects bore 54 which chamber 52. In the rest position as shown in Figure 1, a poppet 62 is held away from seat 64 and free communication is provided between chambers 50 and 52 through bore 54 by way of passages 58 and 60. With poppet 62 unseated, vacuum which is communicated from a source to chamber 50 through check valve 66 evacuates air from chamber 52 and allows a spring 68 to hold wall 48 against shell 25 as shown in Figure 1. Thereafter, as is conventional, when an input force is applied to push rod 14, poppet 62 is urged against seat 64 to interrupt fluid communication from chamber 50 through passage 58 and allow air to flow through bore 54 into chamber 52 by way of passage 60. With air in chamber 52 and a vacuum present in chamber 50, a pressure differential acting on wall 48 develops a force that is transmitted through push rod 38 to piston 44 in master cylinder 22.

In addition to piston 44, the master cylinder 22 has a forward piston 43 located in bore 42. A spring 70 which is located in bore 42 acts on piston 43 to hold the latter away from the bottom of bore 42 to define a forward pressure chamber 72 in master cylinder 22. A similar spring 74 is located between pistons 43 and 44 to hold piston 44 against a stop 80 to define a rearward pressure chamber 76 in master cylinder 22. In the absence of an input force from push rod 38, springs 70 and 74 urge pistons 43 and 44 toward stop 80 as shown in Figure 1.

Chambers 72 and 76 are connected to the rear and front brakes 18 and 16, respectively, through outlet passages 82 and 84. Compensator valves 86, 86' are located in passages 82 and 84 to control the communication of fluid between reservoir chambers 88 and 90 and brake conduits 92 and 94 going to the rear and front brakes.

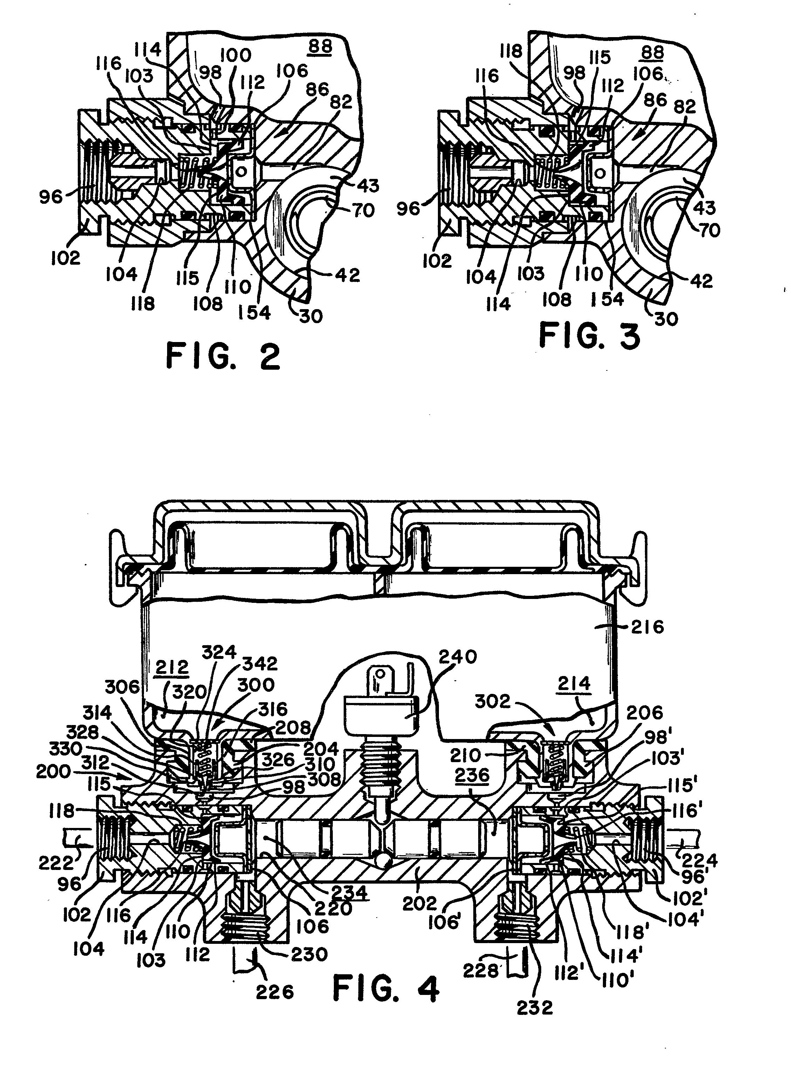

The compensator valves 86, 86' which are located in respective passages 82 and 84 are identical. Therefore, only valve 86 located in passage 82 and shown in Figures 2 and 3 is described in detail.

Passage 82 extends from bore 42 through stepped bore 104 in an adapter 102 to outlet port 96. Adapter 102 engages the housing 30 to hold a retainer 106 adjacent to bore 154 and align groove 108 with a passage 98 going to reservoir chamber 88. Groove 108 is connected to the interior of stepped bore 104 by a series of radial passages 100.

A resilient tubular member 110 has a lip 112 that engages stepped bore 104 and an end section 114 with a central opening 116. As shown in Figure 2, the internal resiliency of the end section or cap 114 is such that opening 116 is normally closed. A spring 118 located in bore 104 acts on end section 114 to urge tubular member 110 toward retainer 106 to establish a flow path between reservoir chamber 88 and brake conduit 92 connected to outlet port 96 for replenishing any fluid lost from the rear brake system and thereby maintain the maximum operating efficiency of the fluid pressurizing device 12.

In a vehicle equipped with a fluid pressure device 12 when an internal combustion engine is operating, a vacuum is communicated to chamber 50 in the brake booster 20 by way of conduit 65 and check valve 66.

In the brake release position, as shown in Figure 1, vacuum evacuates air from chamber 52 by way of passage 60, bore 54, and passage 58 to equalize the pressure across wall 48. With the pressure across wall 48 equalized, return spring 68 holds wall 48 against the rear shell 25.

In response to an input force applied to push rod 14, a plunger 15 moves to allow spring 61 to urge poppet 62 against seat 64 and interrupt fluid communication between chamber 50 and bore 54.

Further movement of plunger 15 moves its annular face 17 away from poppet 62 to allow air from the surrounding environment to enter chamber 52 by way of bore 54 and passage 60. With air in chamber 52 and a vacuum in chamber 50, a pressure differential is created across wall 48. This pressure differential acts on wall 48 to develop a force that is transferred into push rod 38 through hub 46.

The force from push rod 38 moves pistons 44 and 43 to immediately initiate the development of a fluid pressure in chambers 76 and 72. This fluid pressure is transmitted through passages 82 and 84 for distribution to the rear and front brakes after passages 98, 98' to reservoir chambers 88 and 90 are closed through a movement of compensator valves 86, 86' as shown in Figure 3.

Passages 98, 98' are closed by valves 86, 86' responding to the fluid pressure developed in chambers 72 and 76 on movement of pistons 43 and 44. The fluid that is expelled from chambers 72 and 76 through passages 82 and 84, respectively, acts on the end section 114 of each tubular member 110 to move face 115 against shoulder 103 in opposition to spring 118 and seal bore 104 from radial passages 100. Thereafter, the fluid from chambers 72 and 76 expands the opening 116 to allow fluid from chambers 72 and 76 to freely flow into conduits 92 and 94 connected to the rear and front brakes 18 and 16.

On termination of the input force on push rod 14, plunger 15 engages poppet 62 to interrupt the communication of air into chamber 52 and open communication between chamber 50 and chamber 52 to allow vacuum to evacuate air from chamber 52 and equalize the pressure across wall 48. Thereafter spring 68 moves wall 48 toward shell 25.

As wall 48 moves toward shell 25, springs 70 and 74 move pistons 43 and 44 toward stop 80 in the housing 30 of master cylinder 22 to reduce the pressure in chambers 72 and 76. As the pressure in chambers 72 and 76 is lowered, the force acting on the end section 114 of each compensator valve 86, 86' is reduced. At some predetermined level, springs 118, 118' in conjunction with the fluid pressure in conduits 92 and 94 acts on end section 114, 114', move face 115 away from shoulder 103 to allow fluid to be released into reservoir chambers 88 and 90. If the pressure level in chambers 72 and 76 is lower than in bore 104, 104', lip seal 112, 112' moves away from bore 104, 104' to allow fluid to flow past retainers 106, 106' into

7 0049185

chambers 72 and 76 to completely fill these chambers when piston 44 is against stop 80.

From the above description of the operation of this fluid pressure device 12 it should be evident that the seals on pistons 43 and 44 never engage the outlet ports 82 and 84 in the housing 30 and thereby the possibility of damage to such seals is reduced. In addition, the volume of fluid that flows from chambers 72 and 76 to move the compensator valves 86, 86' and interrupt fluid communications between chambers 88 and 90 and conduits 92 and 94 is very small and, as a result, the operational fluid pressure that is developed on movement of pistons 43 and 44 is immediately supplied to wheel brakes 18 and 16 without any substantial lost motion. Still further, by the integration or telescoping of section 28 of the master cylinder housing 30 into the front shell 24 of the brake booster device, the overall dimension of the fluid pressurizing device 12 can be reduced as compared to conventional fluid pressurizing devices. This integration occurs because the compensation passages 98, 98' can be located at the bottom of the stroke of the pistons 43 and 44 rather than at the beginning as is conventional.

For some applications it may be desirable to locate the master cylinder reservoirs 88 and 90 at a location remote from housing 30 such as with a fluid pressure differential warning device 200 as shown in Figure 4.

In the device 200 shown in Figure 4, like parts are identified with the same numbers as in Figure 1.

In this pressure differential device 200, which is fully described in a copending patent application, passages 98, 98' are located adjacent the ends of housing 202. Projections 204 and 206 extend through grommets 208 and 210 to connect chambers 212 and 214 in reservoir 216 with the brake system. Adapters 102, 102' attached to housing 202 locate the compensator valves 86, 86' in the stepped bore 220 to control the communication between chambers 212 and 214 and conduits 222 and 224 going to the front and rear brakes, respectively.

Passages 84 and 82 of the master cylinder housing 30 are connected by conduits 226 and 228 to ports 230 and 232 in the pressure differential device 200.

The operation of the fluid pressurizing device 12 in conjunction with the pressure differential device 200 is as follows :

The operator supplies an input force to push rod 14 that moves plunger 15 to allow spring 61 to urge poppet 62 against seat 64 and interrupt communication between chambers 50 and 52. Thereafter, a pressure differential develops between air that is communicated to chamber 52 by way of bore 54 and passage 60 and vacuum present in chamber 50. This resulting pressure differential acts on wall 48 to produce a force that is transmitted into push rod 38 to move pistons 43 and 44. On movement of pistons 43 and 44 fluid under pressure is immediately expelled from chambers 72 and 76 through passages 82 and 84 and transferred to chambers 234 and 236 in the pressure differential device 200 by way of conduits 226 and 228.

The fluid under pressure in chambers 234 and 236 in normal operation is equal and thus the indicator device 240 remains in the off condition. However, the fluid under pressure simultaneously acts on the end cap or sections 114, 114' of the tubular members 110, 110' to initially move face 115, 115' into engagement with shoulders 103, 103' to interrupt fluid communication from chambers 212, 214 in reservoir 216 to bores 104, 104' in adapters 102, 102'. Thereafter, the fluid under pressure causes the end sections 114, 114' to expand and allow fluid to flow through openings 116, 116' and into conduits 222, 224 for distribution to the rear brakes 18 and front brakes 16 of the vehicle. Since fluid pressure developed in chambers 72 and 76 of the master cylinder housing 30 is immediately transmitted to conduits 222, 224, actuation of the wheel brakes 16 and 18 is substantially simultaneous with the transmission of an input force to push rod 14.

On termination of the input force on push rod 14, spring 61 moves plunger 15 to disengage poppet 62 from seat 64 and allow vacuum in chamber 50 to evacuate air from chamber 52. As air is evacuated from chamber 52, the pressure differential across wall 48 is eliminated and spring 68 moves wall 48 toward shell 25. On movement of push rod 38 toward shell 25, the fluid pressure in chambers 72 and 76 and correspondingly chambers 234 and 236 is reduced. With a reduction in the fluid pressure in chambers 234 and 236, the fluid pressure in conduits 222 and 224 and spring 118, 118' acts on and moves faces 115, 115' away from seats 103, 103' to allow fluid to flow into chambers 212, 214 until the pressure in chambers 234 and 236 is again large enough to overcome springs 118, 118' and reseat faces 115, 115' on seats 103, 103'.

If the pressure drop in chambers 234, 236 is significant, fluid from chambers 212, 214 flows around lips 112, 112' into chambers 234, 236 in order that the front and rear brake systems are completely filled with fluid with the pressurizing device 12 shown in Figure 1 in the rest position.

Under some circumstances if the brake actuation pedal attached to push rod 14 is rapidly actuated, it is possible to flow fluid into chambers 212 and 214 rather than back into chambers 72 and 76 via chambers 234 and 236, and conduits 226 and 228. If the brake system is not completely filled with fluid, pistons 43 and 44 must travel a greater distance to produce the same output pressure in the fluid transmitted to the wheel brakes 16 and 18. Therefore, it is desirable that the front and rear brake systems remain completely filled with fluid at all times. This is why valves 300 and 302 are located in projections 204 and 206.

Valves 300 and 302 are identical and therefore only the specific details of valve 300 shall be described and the corresponding components in valve 302 identified by the same numbers plus a prime.

Valve 300 has a cylindrical body 306 made of a resilient material with a projection 308 that extends through an opening 310 in projection 204. Projection 308 has a slit 312 located in the end thereof. The cylindrical body 306 has ribs 314 and 316 located on the external surface which engage bore 320 to align projection 308 in opening 310. A spring 342 located between retainer 324 and shoulder 326 holds face 328 against seat 330 to prevent fluid in reservoir 212 from flowing into outlet port 98 except through opening 310 in projection 308.

When an operator desires to effect a brake application, valves 300 and 302 remain inactive since valves 86 and 86' immediately respond to the fluid pressure developed in chambers 72 and 76 to close passages 98 and 98'. When the input force applied to push rod 14 terminates and pistons 43 and 44 are moved toward stop 80, the fluid pressure in chambers 234 and 236 drops to create a pressure drop across end sections 114 and 114'. This pressure drop acts on the end sections 114 and 114' to move the cylindrical bodies 110 and

110' away from seats 103 and 103'. Since the fluid pressure in brake conduits 92 and 94 is higher than in chambers 234 and 236, fluid flows around lips 112 and 112' to fill the space in chambers 72 and 76 as pistons 43 and 44 move toward stop 80. Even though the fluid in conduits 92 and 94 is under pressure, the force of springs 342 and 342' in valves 300 and 302 must be overcome before fluid is released into chambers 212 and 214 through the movement of faces 328 and 328' away from seats 330 and 330'. Thus, the pressure differential required to flow fluid around lips 112 and 112' is enhanced with a residual back pressure build up in passages 98 and 98'. However, if the fluid pressure in either passages 98 and 98' drops below the fluid pressure in corresponding chambers 212 and 214, fluid flows therefrom through opening 312 or 312' into passage 98 or 98' to add fluid to the system and thereby completely fill the brake system when piston 44 engages stop 80.

## CLAIMS

1. A compensator valve for a fluid pressurizing device (22) having a housing (30) with a bore (42) therein, at least one piston (43, 44) slidably received within said bore and defining a pressure chamber (72,76) therewith, a first passage (82, 84) for connecting said chamber to an outlet port (96) communicable with a fluid pressure responsive device (18, 16), a second passage (98, 98') for connecting said chamber to a fluid reservoir (88, 90) to allow replenishment fluid to be communicated with said chamber, and a compensator valve (86, 86') controlling said second passage so as to interrupt fluid communication therethrough in response to movement of the piston from an idle position toward an operating position under the action of an input force, characterized in that the second passage (98, 98') communicates with and intersects the first passage (82, 84) outside the bore (42), and in that the compensator valve (86, 86') is located at the intersection of said passages and is designed so as to close the second passage in response to pressurization of the fluid within the pressure chamber (72, 76) and immediately allow pressurized fluid to be communicated through the outlet port (96) to the fluid pressure responsive device (18, 16) on movement of the piston (43, 44).

2. A compensator valve according to claim 1, characterized in that it comprises a pressure responsive valve member (110) slidably mounted at the intersection of both passages, said valve member having an end face (115) which cooperates with an annular fixed seat (103) for controlling fluid communication through the second passage (98, 98'), said end face being normally urged away from said seat to permit fluid communication between the second and first passages, and urged against said seat upon pressurization of the fluid contained in said pressure chamber on movement of the piston (43, 44).

3. A compensator valve according to claim 2, characterized in that it further includes a spring (118) cooperating with said valve member (110) for urging its end face (115) away from the fixed seat (103) to require the presence of a predetermined fluid pressure in the pressure chamber before interrupting fluid communication through the second passage.

4. A compensator valve according to claim 2 or 3, characterized in that it further includes a tubular section terminating in a peripheral radially-extending lip (112) at its end opposite said

12                                                    0049185.

end face (115), said lip slidably engaging the housing and permitting
fluid communication through the second passage from the reservoir
toward the pressure chamber when the pressure in the latter is less
than that in said reservoir.

5. A compensator valve according to claim 4, characterized
in that it further includes inside its end face (115) an opening (116)
which controls fluid communication through the first passage and which
resiliently expands under the action of the fluid pressure within the
pressure chamber once said end face (115) is urged against its associated fixed seat (103).

6. A compensator valve according to any of claims 1 to 5,
characterized in that it further includes a valve (300, 302) for restricting the flow of fluid through the second passage (98', 98') to
limit the communication of fluid into the reservoir (212, 214) on
movement of said valve member (110) away from said fixed seat (103).

FIG. 1

FIG. 2

FIG. 3

FIG. 4